# EUROPEAN PATENT APPLICATION

(11) **EP 4 456 475 A1**
(43) Date of publication of application: **30.10.2024**
(21) Application number: 24172479.8
(22) Date of filing: 25.04.2024
(51) Int. Cl.: H04L 9/00, G07C 13/00

(54) **A DIGITALLY SECURED METHOD OF CONDUCTING VOTES USING A DIGITAL HARDWARE WALLET, A SYSTEM OF DEVICES CONTAINING A DIGITAL HARDWARE WALLET FOR CONDUCTING VOTES AND A DIGITAL HARDWARE WALLET**

(30) Priority: 29.04.2023 PL 44471123
(71) Applicant: SMART CABLES Sp. z o.o., 43-394 Rudzica (PL)
(72) Inventor: Maj, Rafa, 34-312 Mi dzybrodzie Bialskie (PL); Gawlas, Marcin, 43-394 Rudzica (PL); Piech, Krzysztof, 04-680 Warszawa (PL); Oleksy, Robert, 33-190 Bogoniowice (PL); Rydzewski, Jakub, 31-052 Kraków (PL); Kie bus, Rafa, 66-415 Wojcieszyce (PL); Ksi ak, Tomasz, 94-048 ód (PL); Król, Jakub, 44-335 Jastrz bie Zdrój (PL); Kozok, S awomir, 44-100 Gliwice (PL); Dzieci tkowski, Marcin, 43-100 Tychy (PL); Bartczak, Micha, 44-335 Jastrz bie Zdrój (PL); K ossowicz, Anna, 90-063 ód (PL); Pasi ski,, Pawe, 95-080 Tuszyn (PL); Tomicki, Kamil, 15-667 Bia ystok (PL)
(74) Representative: Tyrala, Magdalena

(57) **Abstract**

A computer-aided, digitally secured method of conducting voting using digital tokens is characterized by the fact that it includes a hardware digital wallet and voting software implemented on a computer server and users' computers or smartphones, which includes a program supporting communication with an external P2P network and between users' computers and communication between users' computers and a hardware digital wallet, where communication with the external P2P network takes place through a secret communication channel and that user authorization data and voting data are stored in the blockchain and voting transactions are mixed in such a way that many input addresses IN A ...IN n, are mixed with multiple output addresses OUT 1... OUT per transaction ID is signed with a digital key pair associated with IN A ... IN n, which prevents external entities from associating the input address with the output address, and this operation transfers the voting token from the old key for a new one. The invention also concerns a system of devices intended to implement this method and a hardware digital wallet containing cryptographic keys in the memory used to authorize the system user and implemented software to handle these keys, a system of hardware components of the wallet and wallet user interface software.

## Description

The subject of the invention is a method of conducting votes using a system of devices containing a digital hardware wallet in which data is digitally secured. The subject of the invention is also a system of digital devices containing a digital hardware wallet designed to conduct votes in electronic form. The subject of the invention is also a digital hardware wallet used to conduct voting. The system works based on the blockchain network and connects to this network through a trusted computer, smartphone, tablet or other useful digital device containing a microprocessor and a display. The digital hardware wallet and the method of voting protect against external hacking into the system and influencing the voting results.

Usability tests conducted in accordance with the international standard WCAG 2.1 showed that users from various countries need the ability to cast their votes safely via mobile or desktop applications, without having to leave home or go to a polling station. This need is particularly important for older people, disabled people, younger generations and people living abroad. Replacing the paper voting system with a digital one will significantly increase the frequency of various votes, including local referendums and General Meetings of Shareholders. Moreover, the digital voting system enables public opinion surveys to be carried out while ensuring the anonymity of the vote and at the same time allowing the identification of respondents' profiles. Thanks to these changes, the voting process becomes more accessible, convenient and safe for all users.

There are known hardware devices - wallets used to store private keys for digital assets in various blockchain networks. These devices contain personal digital keys stored in memory and implemented cryptographic algorithms, as well as microcontrollers that support them and devices that constitute interfaces with the external environment, such as a display, communication ports and, optionally, buttons that activate device functions. Examples of such a portfolio are the Trezor^{®} product series by SatoshiLabs or the Ledger^{®} product series from Ledger SAS.

US2022114584A1 discloses methods, devices and techniques for defining and using bearer token records to transfer a cryptographic asset from a sending account and where a key is required as proof of ownership of the bearer token to complete the transfer to the receiving account. Certified bearer tokens are locked for later transfer to a specific receiving account during generation. Lockable bearer tokens can be locked after being generated using a second key. Bearer token records may expire to revert the crypto asset to the sending account if not terminated with the secret key. Bearer token records can be implemented on the blockchain. Small denomination crypto asset bearer tokens are useful for various transactions such as streaming or other online services. The computing device provides a wallet from which you can pay using bearer tokens. Various user interfaces and applications are presented.

International application WO2023277429A1 discloses a blockchain voting method that can reward voice and a system for doing so. The blockchain voting method includes steps in which: the issuing server issues the first token to be used for voting; the first token is transferred to the user's terminal, where the wallet application of the voter who has the right to vote is implemented; the user terminal allows the voter to start voting using the first token and store the second token in the user terminal, where the wallet application of the voter who has finished voting is launched.

The purpose of the present invention is to develop an efficient, safe method and system for voting, ensuring anonymization and encryption of data, which would also be resistant to falsification of results. The purpose of the invention is also to quickly obtain voting results in real time. The purpose of the invention is also to develop a device dedicated to the voting procedure, which would ensure a safe data flow and authorization, resistant to external attacks.

A computer-aided, digitally secured method of conducting voting using digital tokens is characterized by the fact that it contains
- hardware digital wallet containing a microcontroller, buttons, display, memory, cryptographic coprocessor, communication port, device power block and cryptographic keys stored in memory and implemented software to handle these keys and the system of components,
- voting software implemented on a computer server and users' computers or smartphones, which includes a user interface program, a program supporting communication with an external p2p network and between users' computers and communication between users' computers and
a hardware digital wallet, wherein communication with the external p2p network takes place through a secret communication channel,
wherein the method comprises the following steps:
a) granting voting rights to voting users who have a public key
b) creating voting parameters in the voting organizer's user interface software,
c) broadcasting information about voting in the p2p blockchain network
d) downloading voting information by the voting user according to his public key,
e) authorization of a user voting using a hardware digital wallet
f) providing voting rights to voting users - tokens
g) creating keys for use in voting by users voting in the blockchain,
h) transaction mixing in which multiple input addresses, IN A... IN n, are mixed with multiple output addresses OUT 1... OUT on the transaction ID The ID is signed with a digital key pair associated with IN A... IN n, which prevents external parties from associating the input address with the output key, and this operation transfers the voting token from the old key to the new one,
i) optionally repeating the mixing operation once or multiple times
j) voting for the selected option.

In a preferred variant, the voting program creates parallel voting parameters in which the voting user can use the same key described in point g), from which derived keys for each vote are created.

Preferably, mixing includes the steps:
h.1.) detection of current votes in which the voter has the right to vote by downloading the list corresponding to the public key of the voting user,
h.2.) generating the transaction output and broadcasting it on the p2p network, with the structure consisting of a hash of the public key and a value representing the number of votes that can be cast by the voter;
h.3) after the mixer completes five transaction outputs, an incomplete transaction without input structures is broadcast;
h.4.) the voting user checks whether the received transaction contains the transaction exit he created, if so, he adds his entry to the transaction without a signature and broadcasts the transaction through the node;
h.5.) Transactions arrive at the mixer, each consisting of five transaction outputs and one transaction input, each transaction reaching the mixer has the same group of transaction inputs, the mixer creates a new transaction with the same group of transaction outputs, from each of them it copies the input to the transaction and receives a transaction with five inputs to the transaction and five outputs from the transaction,
h.6.) mixed transactions are broadcast on the blockchain in the network,
h.7.) the voting user checks whether the received transaction includes his input and output, if so, he signs it and broadcasts it on the network, the transaction is saved in the distributed blockchain database,
h.8.) the process described in points h.3.) - h.6.) may be repeated or voters may proceed to the transaction of casting votes.

The system of devices for a computer-aided, digitally secured method of conducting voting using digital tokens according to the invention includes a server and many computers connected to each other via a P2P network, where voting software is implemented in the server and many computers, which includes a program supporting communication with an external P2P network and between users' computers The system is characterized by the fact that it contains:
- hardware digital wallet containing components: microcontroller, buttons, display, memory, cryptographic coprocessor, communication port, device power block and cryptographic keys stored in memory and implemented software to handle these keys, component system and user interface software,
- implemented software supporting communication between voting users' computers and their hardware digital wallet, as well as user interface software,
   wherein,
- communication with the external P2P network takes place via a secret communication channel.

The hardware digital wallet for implementing the voting method includes the following components: microcontroller 2, buttons 3, display 4, memory 5, cryptographic coprocessor 6, communication port 7, device power supply block 8 and cryptographic keys stored in memory 5 and the implemented software to handle these keys, the system components and digital wallet hardware user interface software.

Thanks to the e-voting application, it is possible to vote from anywhere, which is a significant advantage compared to traditional forms of voting using a pen and paper. The application enables 100% voting outside the polling station, including among users located abroad, which was previously difficult to implement. Moreover, it is expected that such a system will have a positive impact on the environment, contributing to an increase in the number of public consultations, referenda, etc. The application ensures ease and speed of voting, which may contribute to increasing the frequency of voting and elections. It is possible to cast a vote in less than 7 seconds (counting from entering the PIN into the hardware wallet), compared to several or several dozen minutes in the case of participation in a polling station.

The device in the form of a digital hardware wallet ensures the security of authorization data for voting. It is not possible to extract data from it. During many attempts, it was not possible to interfere with the device.

The invention is presented in the drawings, where:
Fig. 1 shows a diagram illustrating an example voting
Fig. 2 shows a block diagram of the voting device,
Fig. 3 shows an illustration of connecting a smartphone or computer to a digital wallet device,
Fig. 4 shows a flowchart of transaction mixing to anonymize voter identity.
Fig. 5 shows the data flow diagram of the voting system.
Fig. 6 shows a view of the digital wallet device.

An example of conducting elections.

The inventors proposed a fully verifiable system for remote voting via the Internet - all voters and anyone else can independently calculate the vote result. At the same time, it allows you to achieve anonymity, so no one can be sure of other users' choices, although the overall result is known.

This is done by carefully publishing certain information on a public digital bulletin board (in the form of Blockchain) while other information remains secret and never published, and some other information is sent from anonymous sources, using Tor-like methods.

The entire system is composed of three main modules:
- blockchain - a module responsible for writing and reading the block chain from the disk,
- graphical user interface (GUI) with a p2p module responsible for network communication,
- hardware digital wallet - a module responsible for handling cryptographic keys saved on an external device.

A hardware digital wallet stores user identity keys in its memory, signs transactions with the selected key, and generates addresses on demand. A hardware digital wallet communicates with a computer in the form of a personal computer, smartphone, tablet, or similar device that contains graphical user interface software. This interface handles user interactions with the harvesting system. The interface also reads the identity of the hardware digital wallet. The interface also has a p2p network communication module. The blockchain module stores hash data to identify and verify users, as well as voting data. The blockchain module communicates with the user interface bilaterally.

Description of used terms:
Election (elections, voting) - voting of any type (either where one of the candidates is chosen, one of the options or any other process of casting a vote/votes that leads to countable results.) Voter - a user who should be allowed to join and vote in a specific poll.
Issuer - a person or entity that validates a voter's voting rights in the system, for example a city hall employee.
Organizer - an entity organizing elections and selecting Issuers (Exhibitors) who will allow voters to cast their votes.
AdminSys - (System Administrator) - entity granting rights to the Organizer and validators of "transactions" in the blockchain network.
Node - is an independent instance of the program, usually running on its own computer, that executes the protocol.
token (token) - is a digital unit that represents a one-time right to vote.
pubkey, seckey, hash, mempool, address, block - cryptography terms known to specialists, usually used in English. They mean public key, private key, hash function result, waiting transaction memory, address, data block.
ID, identity - this is the digital identification of an entity, e.g. Voter, Issuer, etc. Depending on the context, it means how others see it (address, pubkey), or the ability to prove the authenticity of the identity (signature using seckey)
TX, transaction - is a digital operation that records certain events in the Blockchain, such as the transfer of tokens between IDs.
UTXO (Unspent Transactions Outputs) - a list of tokens that are ready for use.
Tor - from The Onion Router - a virtual computer network implementing second-generation onion routing. The network prevents the analysis of network traffic and, consequently, provides users with almost anonymous access to Internet resources. In the solution according to the invention, it is used to hide the IP address of Node. Tor HS (Hidden-Service) is used to deliver messages from an anonymous user to a recipient identified by an HS address (which is a form of the fingerprint associated with the public-key).
Transaction validator - this is an entity (person/computer) that performs the process of creating new blocks in a given blockchain

Blockchain, or blockchain, is defined as a growing list of grouped sets of "transactions" (here: votes) called blocks, which are linked together using cryptography. Each block consists of a timestamp, transaction data and a cryptographic hash of the previous block, thanks to which they form a one-way chain in which the blocks created are linked to all previous ones. Blockchain architecture is characterized by immutability. Modifying the data contained in a block that has already become part of the chain would change its cryptographic hash, which is contained in the next block. Replacing the hash in the previous block would lead to changing its own hash, which would then be rejected by every node in the network, causing a domino effect. Blockchains are usually managed in a peer-to-peer manner and function as a distributed database in which all network nodes follow the rules of a certain communication protocol used to verify the correctness of the proposed blocks. Although there are many ways to attack a blockchain network, most of them are eliminated by at the protocol level, and blockchain technology is generally considered safe.

In the proposed system, everything is based on the flow of tokens - Vote Token - VT, which are sent in transactions (TX), each TX is first placed in the mempool and then included by transaction validators in the blockchain block, and therefore saved in the current UTXO.

System users, e.g. those voting on the website using the user interface, can create their own accounts that are authorized, e.g. by downloading a token from a website known to the server and signing it with the user's key, inside the application launched by the user.

Any active organizer can create a vote using the interface. Each user can obtain the right to vote from the issuer. Voting uses a mixing protocol internally to anonymize voters. The results are recorded in the blockchain.

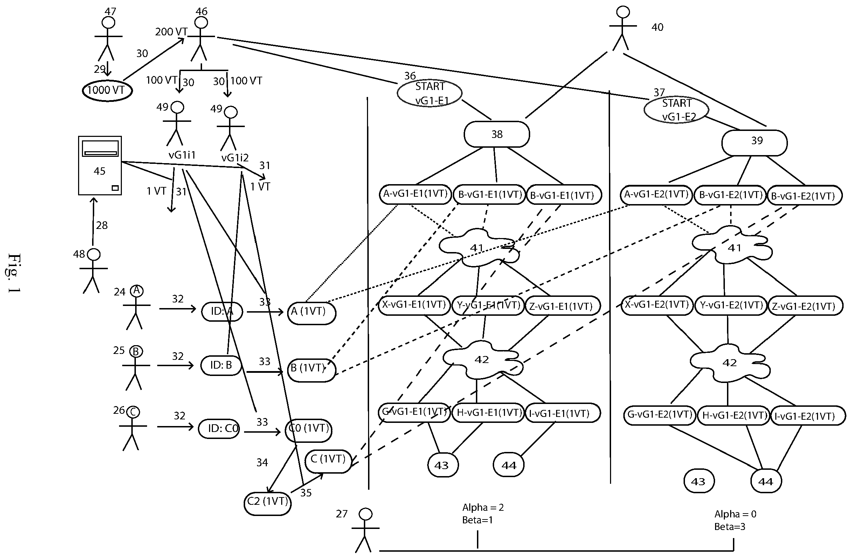

An example election diagram is shown in Fig. 1. In this simplified example, there are three voters (voters): A 24, B 25, C 26

The organizer 46 creates the elections and appoints issuers 23 (issuers, hereinafter referred to as issuers), who in turn authorize 33 voting users 24, 25, 26 by providing them with tokens 30, 31.

The electoral rights and data of voters 24, 25, 26 are prepared and verified 28 by auditors 22. This data is contained in the server 45. The system administrator (Adminsys) 21 issues 29 a pool of voting tokens (VT - Vote Token in Fig. 1 as VT ), e.g. issues 1000 VT tokens. He transfers some of the tokens, e.g. 200 VT, to organizer 23, who organizes the vG1 vote. The organizer 46 distributes tokens to exhibitors 23, e.g., provides two exhibitors with 100 VT each.

Voters 24, 25, 26 enter the voting system, generate their ID 32 and obtain authorization 33 from Issuers 23 who are themselves authorized by Organizers 20 authorized by the system administrator 21.

Organizer 46 creates a vote VG1-E1 which is announced on the blockchain. Once voters have tokens and the right to vote, they can proceed to vote. For example, voter 24 with the key "A" joins the voting VG1-E1. A new key is created in the blockchain to be used in this vote, it is the A-VG1-E1 key. Voter B 25 does the same and has key B-VG1-E1. The same is true for voter C 26. Each voter 24, 25, 26 can also take part in parallel votes created by the same Organizer 46, for example for user A 24 the same key A can also join another vote, e.g. VG1-E2, as ID "A-VG1-E2". Therefore, the master key A can split into 1 additional token for each vote , i.e. from the master key A, derivative keys for each vote are created. Such a new token can never be used anywhere except for one specific vote.

As part of one vote, voters 24, 25, 26 can jointly sign 3 new keys X-vG1E1, Y-vG1E1, Z-vG1E1 which replace their 3 old keys, but without specifying who is who in the new keys. This operation is called mixing and marked 41. This operation, of course, transfers the voice from the old key to the new one, and you cannot vote using the old key. This, however, does not affect the keys created for other "parallel" votes, nor the primary identity key A, B, C, etc. This ensures anonymity for voters. This operation should be repeated several times to increase the security of your anonymity. E.g. by mixing 42, where the keys G-vG1-E1, H-vG1-E1, I-vG1-E1 are obtained. This happens analogously in parallel voting vG1-E2.

Ultimately, such a final key in a given vote can cast 1 vote for one of the voting options 43, 44. In more general systems, users - voters can sign their response to the digital pool in this way.

When a voter, for example voter C 26, wants to change his master key, for security reasons or in the event of a change of computer, he changes the key and regains his identity by transferring his rights to the new key. The transfer operation 35 must be confirmed by the issuer 23.

Voters 24, 25, 26 exchange tokens among themselves. Each voter 24, 25, 26 must transfer them - from the old ID, which is associated by the publisher 23 as belonging to a given voter - to a new, partially anonymous ID from which the vote will be cast.

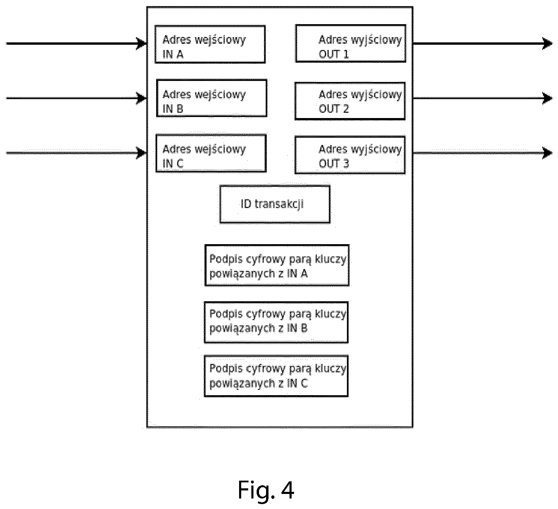

Any external observer 33 can read the entire blockchain, track the flow of IDs and count the election results on their own, but they are not able to attribute votes to the people who cast them. This is due to Mix TX 41, 42, which is described later and illustrated in Fig. 4.

Voting data is encrypted and anonymized in a manner similar to CoinJoin transactions. CoinJoin is a way to create anonymous transactions in blockchain-based systems. It involves combining many transactions into one, the so-called transaction mixing to prevent external entities from associating the input address with the output address. Such a transaction, unlike a regular one, is characterized by many input and output addresses. Due to the fact that the inputs and outputs are not related in any way, external entities observing the blockchain are unable to track the flow of funds between addresses.

Figure 4 shows a flowchart of transaction mixing in a voting system according to the invention. Transaction mixing is where multiple input addresses IN A, IN B, IN C are mixed with multiple output addresses OUT 1, OUT 2, OUT 3. The transaction ID is signed with a digital key pair associated with IN A, a digital key pair associated with IN B and the digital key pair associated with IN C.

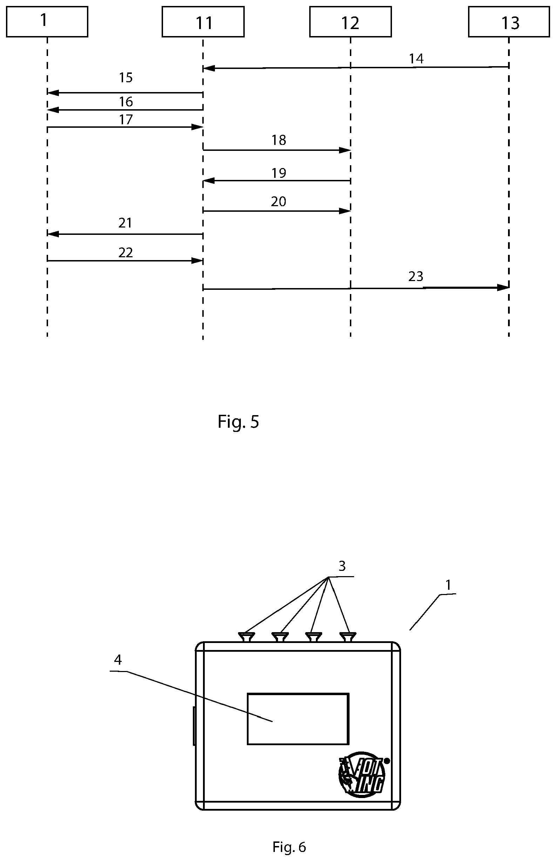

The transaction mixing process is shown in Fig. 5, which shows a diagram of the mixing process according to the invention, in which in the following blocks of rectangles - 1 denotes the hardware digital wallet device, 11 the node of the system for broadcasting transactions, 12 the mixer, 13 the distributed Blockchain database. The data flow is indicated by the arrows: new vote data 14, vote ID of size 32 bytes 15, mix number of size 32 bits (4 bytes) 16, generated public key of size 32 bytes 17, transaction output (vout) 18, transaction without inputs (without vins) 19, entry to transaction (vin) 20, transaction to sign with variable size (Tx to sign) 21, signature (electronic signature) size 64 bytes 22, signed transaction 23.

Network communication should take place using a secret communication channel, e.g. the Tor network.
1. Detection of current votes 14 in which the voter has the right to vote. Once you have the voter's primary public key, you can retrieve the list using the get_active_votings_for_voter RPC query .
2. Generate the output of the vout 18 transaction and broadcast it on the p2p network 12 using the RPC add_vout command or on the p2p 12 network. To generate the vout 18 structure, you need to generate the appropriate derived public key using the webasm get_mix_pk_str function . The function takes as parameters an object of the key_manager class and a structure containing voting number 16 and mix number 17. The voting number is generated by converting the first four bytes of voting_id 15 to uint_32 (voting_id [ 0] is the most significant byte) and then dividing modulo by 2^32 (the first bit must always be 0). Mix number 16 is the next natural numbers. Having the derived public key 17, you can use the get_mix_vout_str function to negate the vout 18 structure . This structure consists of the hash of the public key (blake2b) and the amount value representing the number of votes that can be cast by the voter.
3. After the mixer 11 completes the five outputs from transaction (vouts) 18, an incomplete transaction without input structures (vin) 19 is broadcast.
4. The voter checks whether the received transaction includes the transaction exit ( vout) 18 created by him . If so, it adds its transaction entry (vin) 20 without a signature and broadcasts the transaction through node 11. The structure of the transaction entry ( vin) consists of a signature (filled with zeros), txid (for the first coin join transaction in for a given vote, it is the txid of the voter's authorization transaction. For subsequent ones - txid of the previous coin join transaction) and public key 17, which, after hashing, is identical to one of the public key hashes in the transaction output structures ( vout) 18 with the txid provided earlier.
5. Transactions arrive at the mixer 12, each of which consists of five transaction outputs (vouts) and one transaction input (vina) 20. Each transaction that arrives at the mixer 12 has the same group of transaction inputs (vouts). Mixer 12 creates a new transaction with the same group of transaction outputs (vouts) 18. From each of them it copies the input to transaction (vina) 20 and obtains a transaction with five inputs to transaction (vinas) and five outputs to transaction (vout) 18. Then he spreads it.
6. The voter checks whether the received transaction includes his input 18 (vout) and output 20 (vin). If so, he signs it and publishes it.
7. The transaction is recorded in a distributed database (blockchain) 13. The process may be repeated or voters may create voting transactions.

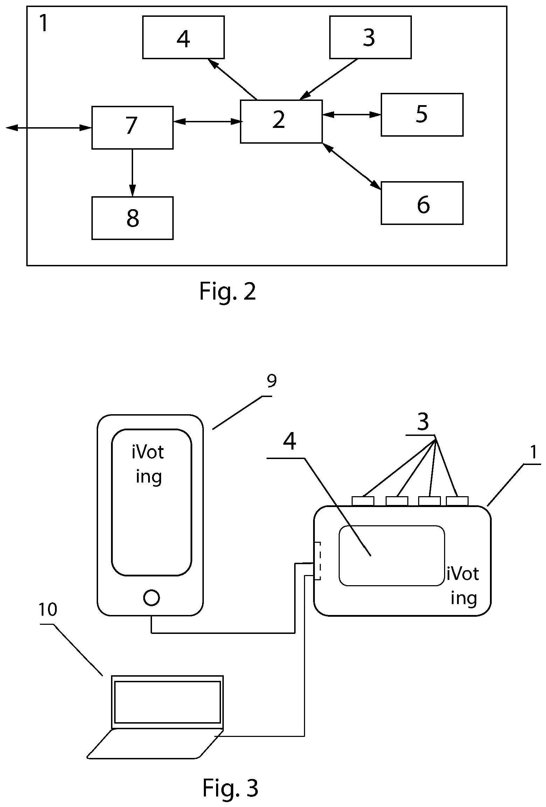

Fig. 3 shows the configuration of devices involved in the voting system. A smartphone 9 or a personal computer 10 on which the voting application is installed is connected to the digital wallet device during voting. A smartphone 9 or a computer 10 that includes a network interface through which it communicates with the network.

On the smartphone 9 or on the computer 10, the voting user launches the voting application and connects the digital wallet device 1. The user authenticates himself on the digital wallet device 1, e.g. by entering a digital code. In voting mode, the user votes in the voting application and the smartphone 9 or computer 10 sends 1 authorization request - data signature - to the digital wallet device. The digital wallet device 1 authenticates and encrypts the data and sends it to the voting application on the smartphone 9 or computer 10.

In another version, the digital wallet device 1 is also used for voting, which is activated using appropriately programmed buttons 4. Then, the voting application on the smartphone 9 or computer 10 sends the voting data to the digital wallet device 1, and the user operates the voting using the buttons. 4. then the voting data is sent back to the voting application.

Example of a device according to the invention.

Fig. 2 shows a block diagram of the configuration of devices contained in the digital wallet device 1. The digital wallet 1 includes a microcontroller 2, buttons 3, a display 4, a memory 5, a cryptographic coprocessor 6, a communication port 7 and a power block of the device 8. The microcontroller 2 is the main element voting device and system used to perform cryptographic calculations in the system, control the user interface using the display 4 and buttons 3, and communicate with the outside world via the USB port 7. Buttons 3, in the example embodiment, are four physical buttons used to control the display 4, performing the function of: scrolling options up/down, confirming selections and returning to the previous menu. Display 4 serves to display information to the user. Flash Memory 5 is encrypted Flash memory used to securely store data. Cryptographic coprocessor 6 is a coprocessor dedicated to performing cryptographic calculations. Communication port 7 is a USB port used for communication with a computer or smartphone. It is also used to provide the basic supply voltage, which is then processed by the device power block 8, which is used to convert the supply voltage into a voltage suitable for powering the microcontroller and other components of the device. The devices are connected to each other as shown in Fig. 2.

In the digital wallet, processors from the STM32F205/STM32F215 and STM32F207/STM32F217 families can be used as microcontroller 2. Preferably, the STM32L4P5CGT6 microcontroller was chosen. Basic parameters of this microcontroller: 1 MB flash memory, 128 kB SRAM memory, support for interfaces/protocols such as I2C, SPI, UART, internal true random number generator, USB port support, analog-to-digital and digital-to-analog converters.

In the embodiment of the digital wallet 1, the smallest possible display 4 was selected with a resolution of 128 pixels by 64 pixels with a diagonal of 1 inch. It is a monochrome display - it displays only two colors - white and black.

The device is powered from the USB 7 port using an LDO stabilizer. This stabilizer draws energy from the USB connector marked and then sets the supply voltage to 3.3V. The stabilizer in the system has elements such as a diode that protects the system against power supply with wrongly polarized input voltage, and a fuse that protects the system against current overload. The device also contains capacitors used to stabilize the output voltage of the system in the event of a sudden jump in the current consumed by the device. In addition, it contains capacitors used to stabilize the power supply of all integrated circuits used in the digital wallet 1.

Microcontroller 2 is the main executive element of the system. It is used to perform cryptographic calculations, control the display 4 and communicate with the outside world via USB 7. There is also a resistor in the system that sets the microcontroller 2 in the mode of reading the program memory from the internal FLASH memory 5. The next capacitors are used to set the correct operation of the microcontroller's internal voltage regulator 2 and for the appropriate polarity of the reset input, which can be used by the programmer. The system also has a programmer connector that allows you to upload the basic firmware. Resistors are used to properly connect USB 7 to microcontroller 2. Additionally, the USB 7 connector is protected against overvoltages. For stable operation of the display, the system includes resistors and capacitors. In addition, there are 3 button circuits in the digital wallet layout.

The digital wallet chip also includes a cryptographic coprocessor 6 that communicates with the main microcontroller 2 via an I2C bus that has pull-up resistors for proper communication.

Additionally, the system includes a capacitor used to stabilize the voltage and eliminate interference resulting from sudden spikes in the consumed current.

The memory module 5 may additionally have the ability to encrypt part of the memory.

The digital wallet system 1 is contained in a housing, an example of which is shown in Fig. 6.

Hardware digital wallet 1 contains implemented firmware in the form of code configuring the microcontroller 2 for communication with other elements of the system - display 4, communication port 7, buttons 4 and cryptographic coprocessor 6. The software is divided into 3 main sections, i.e. bootloader, application and part shared (e.g. corresponding to display operation). All the above-mentioned sections use the statically linked libsodium cryptographic library and the libdtsl library, created for the purposes of the invention, enabling secure communication of the device with an external computer. The hardware digital wallet 1 has an interface that allows signing votes using four buttons 3 and a display 4, it can also sign a vote by receiving an appropriate request from the voting application.

The shared part contains classes corresponding to the handling of graphic elements such as text, pin, progress bar, etc. The base class corresponding to the current state of the device, in other words it is a given screen visible at a given moment, e.g. the main menu or the pin entry screen. It also contains classes for handling communication via the USB-CDC port, handling the display, i.e. drawing simple shapes on it such as a rectangle, circle, line, or single pixels as well as characters with dimensions of 6x8, 7x8, 11x18 pixels. Predefined commands for operating the device, as well as code returns corresponding to the value of the last command executed, have also been implemented here.

The bootloader is the main configuration of the processor as well as linker scripts corresponding to the configuration of data in flash memory and processor RAM.

The firmware contains software for pin status, main menu, settings and voice selection. Communication in the bootloader and firmware takes place via the libdtsl library.

Communication in the bootloader and firmware can take place via the libdtsl library. It works on a principle similar to SSL. Starting communication should always start with the handshake procedure "dtsl_ handshake( )", which works as follows: An external device called "host", sends a handshake frame to the wallet device called "device". The device then responds with the same data frame, and the host sends a frame containing a randomly generated 24B buffer nonce and its 32B public key. After receiving the data, the device sends back its public key. In the last step, the host uses its private key, nonce, and the public key received from the device to encrypt the string of "hello world!" and sends the encrypted text to device. After correctly decrypting the string of characters, the device sends a handshake ending frame to the host. From now on, all communication using the dtsl_ send( ) function is encrypted. Additionally, the commands for sending and receiving data dtsl_ send( ) and dtsl_read() have been implemented in such a way that an additional randomly generated buffer nonce is added to each newly sent message, which is used to encrypt and decrypt the next message.

The device is controlled using four buttons 3 located under the display, which indicate the following options: back, confirm, up, down. Additionally, button simulation with appropriate commands can be implemented.

Conducting voting requires a maximum of 5 seconds on the computational side for one wallet 1. Each wallet can perform over 17,000 votes per day. This gives approximately 34,000 votes per day on two wallets. This applies to open voting. In secret voting, the wallet requires 5 seconds to perform calculations, but mixing on the blockchain (outside of the hardware wallet) requires about an hour. This limits you to approximately 20 votes from one wallet during one day.

The device cannot be hacked by simple offline or online methods - an attempted physical break-in will leave traces of the break-in. This will provide the user with a sense of security that is not available in competitive solutions. The physical device does not have the typical architecture of a regular IT system, so it is a unique piece of equipment for online voting.

The invention is applicable for conducting secure voting without the need to physically participate in the vote. It enables remote voting, regardless of where the voter is.
1. Hardware digital wallet,
2. Microcontroller
3. Buttons
4. Display
5. Memory
6. Cryptographic coprocessor
7. Communication port
8. Device power block
9. Smartphone
10. Computer
11. System node (node)
12. Mixer
13. Distributed blockchain database
14. New vote data
15. Voting ID
16. Mix number
17. Generated public key
18. Exiting the transaction
19. Transaction without entries
20. Trade entry
21. Transaction to be signed
22. Signature (electronic signature)
23. Signed transaction
24. Voter A
25. Voter B
26. Voter C
27. Observer
28. Checking the correctness of granting voting rights to voters
29. Issuance of voting tokens (VT - Vote Token)
30. Transferring tokens for voting
31. Providing voting tokens to users who authorize themselves
32. ID generation
33. ID authorization
34. Changing the key to a new one, e.g. after logging in on another computer
35. Recovering identity by switching to a new key with confirmation from the Issuer (Publisher)
36. Voting starts VG1-E1
37. Voting starts VG1-E2
38. Each token eligible to vote in the vG1-E1 vote results in a new token valid only for that vote
39. Each token eligible to vote in the vG1-E2 vote results in a new token valid only for that vote
40. Blockchain miner - special rules
41. Voting participants perform the Cj operation (analogous to CoinJoin) - Mixing I
42. Voting participants cast their votes from anonymous (one-time IDs) - Mixing II
43. voting for the Alpha option
44. Voting for the Beta option
45. Server
46. Voting organizer
47. System administrator (AdminSys)
48. Auditor
49. Publisher (Issuer)

## Claims

1. A computer-aided, digitally secured method of conducting voting using digital tokens, **characterized in that** it comprises:
- hardware digital wallet containing a microcontroller (2), buttons (3), display (4), memory (5), cryptographic coprocessor (6), communication port (7), device power block (8) and stored in memory (5) cryptographic keys and implemented software to handle these keys and the layout of components,
- voting software implemented on a computer server and users' computers or smartphones, which includes a user interface program, a program supporting communication with an external p2p network and between users' computers and communication between users' computers and a hardware digital wallet, wherein communication with the external p2p network takes place through a secret communication channel,
wherein the method comprises the following steps:
k) granting voting rights to voting users who have a public key
l) creating voting parameters in the voting organizer's user interface software,
m) broadcasting information about voting in the p2p blockchain network
n) downloading voting information by the voting user according to his public key,
o) authorization of a user voting using a hardware digital wallet
p) providing voting rights to voting users - tokens
q) creating keys for use in voting by users voting in the blockchain,
r) transaction mixing in which multiple input addresses IN A... IN n are mixed with multiple output addresses OUT 1... OUT on the transaction ID The ID is signed with a digital key pair associated with IN A... IN n, which will prevent external entities from associating the address input and output, and this operation transfers the voting token from the old key to the new one,
s) optionally repeating the mixing operation once or multiple times
t) voting for the selected option.

2. Method of conducting voting according to claim 1, **characterized in that** the voting program creates parallel voting parameters in which the voting user can use the same key described in point g), from which derived keys for each vote are created.

3. Method of conducting voting according to claim 1 or 2, **characterized in that** the mixing includes the steps:
h.1.) detection of current votes (14), in which the voter has the right to vote by downloading the list corresponding to the public key of the voting user,
h.2.) generating the output of the transaction (18) and broadcasting it on the p2p network (12), where the structure (18) consists of a hash of the public key and a value representing the number of votes that can be cast by the voter;
h.3) after the mixer (11) completes five outputs from transaction (18), an incomplete transaction without input structures (19) is broadcast;
h.4.) the voting user checks whether the received transaction contains the transaction output he created ( 18), if so, he adds his input to the transaction (20) without a signature and broadcasts the transaction through node (11);
h.5.) Transactions arrive at the mixer (12), each of which consists of five transaction outputs (18) and one transaction input (20), each transaction reaching the mixer (12) has the same group of transaction inputs (20), the mixer (12) creates a new transaction with the same group of transaction outputs (18), from each of them it copies the input to transaction (20) and obtains a transaction with five inputs to transaction (20) and five outputs from transaction ( 18),
h.6.) mixed transactions are broadcast on the blockchain in the network,
h.7.) the voting user checks whether the received transaction contains his input (18) and output (20), if so, he signs it and broadcasts it on the network, the transaction is saved in the distributed blockchain database (13),
h. 8.) the process described in points h.3.) - h.6.) may be repeated or voters may proceed to the transaction of casting votes.

4. A system of devices for a computer-aided, digitally secured method of conducting voting according to claim 1, using digital tokens, including a server and many computers connected to each other via a P2P network, where voting software is implemented in the server and many computers, which includes a program supporting communication with an external network. p2p and between users' computers, **characterized in that** it includes:
- hardware digital wallet containing components: microcontroller 2, buttons 3, display 4, memory 5, cryptographic coprocessor 6, communication port 7, device power block 8 and cryptographic keys stored in memory 5 and implemented software to handle these keys, component system and software user interface,
- implemented software supporting communication between voting users' computers and their hardware digital wallet, as well as user interface software,
wherein,
- communication with the external P2P network takes place via a secret communication channel.

5. Hardware digital wallet for the voting method according to claim 1, comprising the following components: microcontroller 2, buttons 3, display 4, memory 5, cryptographic coprocessor 6, communication port 7, device power block 8 and cryptographic keys stored in memory 5 and the implemented software for handling these keys, component system and user interface software hardware digital wallet.
